**Europäisches Patentamt**

**European Patent Office**

**Office européen des brevets**

(11) Publication number: **0 164 972**
**A2**

## EUROPEAN PATENT APPLICATION

(21) Application number: **85303856.0**

(22) Date of filing: **31.05.85**

(51) Int. Cl.⁴: **G 06 F 15/16**

(30) Priority: **08.06.84 US 618872**

(43) Date of publication of application:
**18.12.85 Bulletin 85/51**

(84) Designated Contracting States:
**DE FR GB IT**

(71) Applicant: **AMERICAN TELEPHONE AND TELEGRAPH COMPANY**
**550 Madison Avenue**
**New York, NY 10022(US)**

(72) Inventor: **Shu, Hou Shing Frank**
**8 Valley Point Drive**
**Holmdel New Jersey 07733(US)**

(74) Representative: **Buckley, Christopher Simon Thirsk et al,**
**Western Electric Company Limited 5 Mornington Road Woodford Green Essex IG8 OTU(GB)**

(54) Shared memory multiprocessor system.

(57) In a system comprising a plurality of processors (1, 2, 3) interconnected by an inter- processor communication controller (ICC) (4), information is transferred from one processor to another via the ICC. Commands from an originating processor are entered in the ICC and responses from the ICC are returned to either the originating or the terminating processor. The response from the ICC includes the address of the first buffer location and the length of the buffer for holding data to be received from an originating processor or to be transferrred to a terminating processor. The data buffers (9, 10, 11) are read by a terminating processor by issuing commands to the ICC.

FIG. 1

# SHARED MEMORY MULTIPROCESSOR SYSTEM

## Technical Field

This invention relates to a system comprising multiple processors and, in particular, to a method and apparatus for communication between the processors via a shared memory.

## Background of the Invention

There are ever increasing demands for additional computing power in business applications and scientific research. One way of meeting this demand is by coordinating several asynchronous processors to perform different parts of a task and assemble the partial results to get a final answer. Because the key to coordinating asynchronous processors lies in an efficient interprocessor communication mechanism, it must be done in a way that minimizes interruptions of the operations of each interconnected processor. It is desirable, therefore, to let each processor operate as independently as possible.

Among multiple processor systems, there are shared bus systems and shared memory systems. In a shared memory system, the processors communicate through a shared memory space that can be accessed by all interconnected processors. The sending processor writes a message into a predefined memory space and signals the receiving processor to read from the predefined memory space. A book entitled "MULTIPROCESSORS: A Comparative Study" authored by M. Satyanarayanan and published by Prentice-Hall, Inc., describes some of the known multiprocessor systems, including both the aforesaid shared bus systems and shared memory systems.

These kinds of arrangements work well when there are only two processors. If there are more than two processors, the arrangement becomes involved, especially when one wants to rearrange the configuration or to increase or decrease the number of processors. All the software in each processor has to be modified to reflect the change so that all the processors can be recognized. It would be desirable, therefore, to provide a means of interconnecting processors in such a way that the aforesaid limitations will be eliminated.

## Summary of the Invention

In accordance with the illustrative embodiment of the present invention, there is disclosed a method of transferring information from one processor to another via an interprocessor communication controller (ICC) in a system of processors interconnected by the ICC. Commands are issued from a processor to the ICC and responses are returned from the ICC to the processor.

A request is initiated from one of the processors to the ICC to open a communication channel with a second of the processors. The ICC responds to the request when the second processor is available. The first processor then requests the ICC if it has the required space for receiving and temporarily holding information from said first processor. The ICC informs the first processor when space becomes available. The first processor then sends the information to the ICC. Upon receipt of this information, the ICC interrupts the second processor and the second processor reads the information from the ICC. The communications channel is taken down after the second processor reads the information from the ICC.

More particularly, a command is transferred from one of the processors via an address buffer to the ICC. A command descriptor is selected from a free command descriptor buffer pool, the command is entered in the command descriptor and the command descriptor is placed at the end of a command descriptor queue. In the queue, the command descriptors are linked to one another by pointers. The address of the last command descriptor is entered in a command queue descriptor.

The command queue descriptor has the number of command descriptors in the command descriptor queue, the address of the first command descriptor and the address of the last command descriptor. Each processor has associated therewith a command descriptor queue and a command queue descriptor.

The ICC responds to the command by processing the command, obtaining a free response descriptor from a free response descriptor buffer pool and entering the response in the response descriptor. The response descriptor is then entered at the end of a response descriptor queue. The response descriptors in a response descriptor queue are linked to one another by pointing to the address of the next response descriptor in the queue. The address of the last response descriptor is entered in a response queue descriptor.

The response queue descriptor has the number of responses in a response descriptor queue, the address of the first response descriptor and the address of the last response descriptor. Each processor has associated therewith a response descriptor queue and a response queue descriptor.

The ICC obtains a block of free data descriptors from a free data descriptor buffer pool. The address of the first free data descriptor along with the number of data descriptors in the data block are then entered in the response descriptor queue. Each data descriptor is linked to the next by a pointer, thereby forming a linked list.

Thereafter, the first processor enters the information which is to be sent to the second processor in the aforesaid data descriptor block. The ICC then informs the second processor that data is available for it by entering a response in a response descriptor queue associated with the second processor and interrupting the second processor.

After reading the information, the second processor issues a command to the ICC that the information has been read.

Brief Description of the Drawing

FIG. 1 shows a system of processors interconnected by an interprocessor communication controller;

FIGS. 2, 3 and 4 show details of the RAM of FIG. 1; and

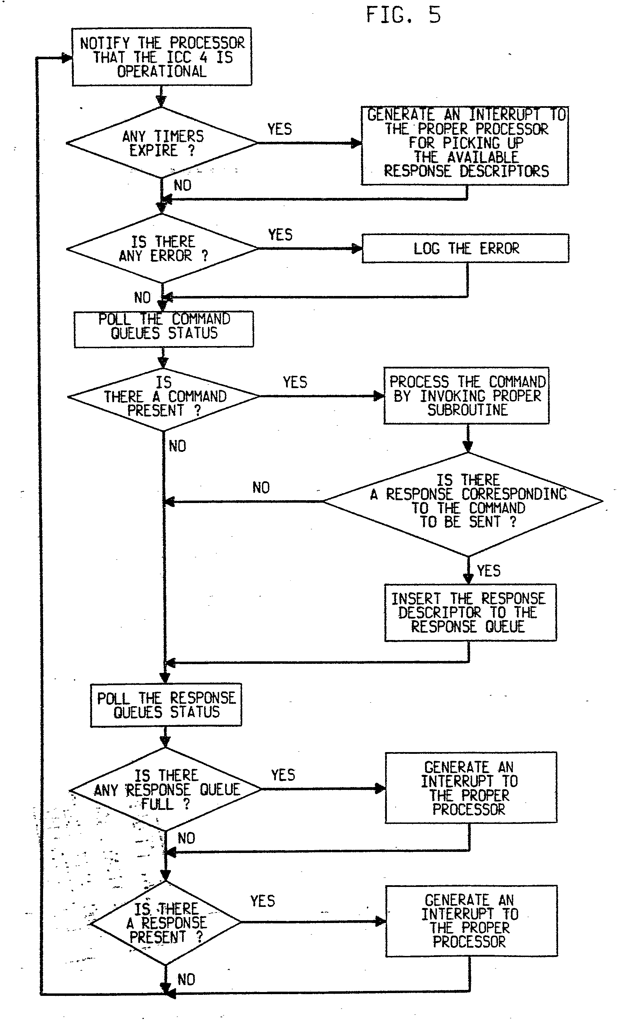

FIG. 5 shows the flow of control.

Detailed Description

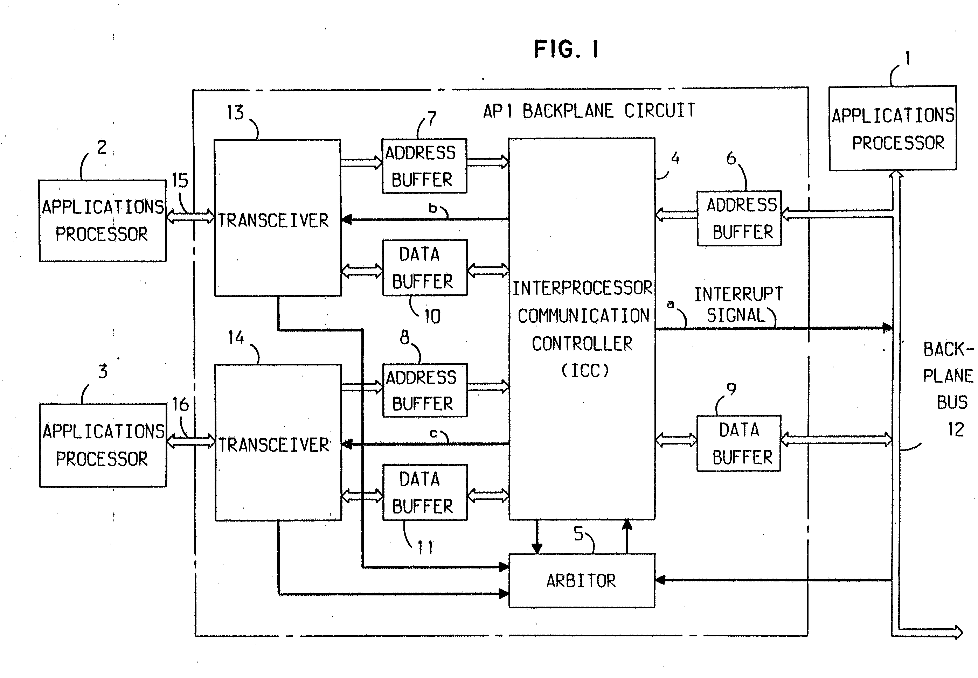

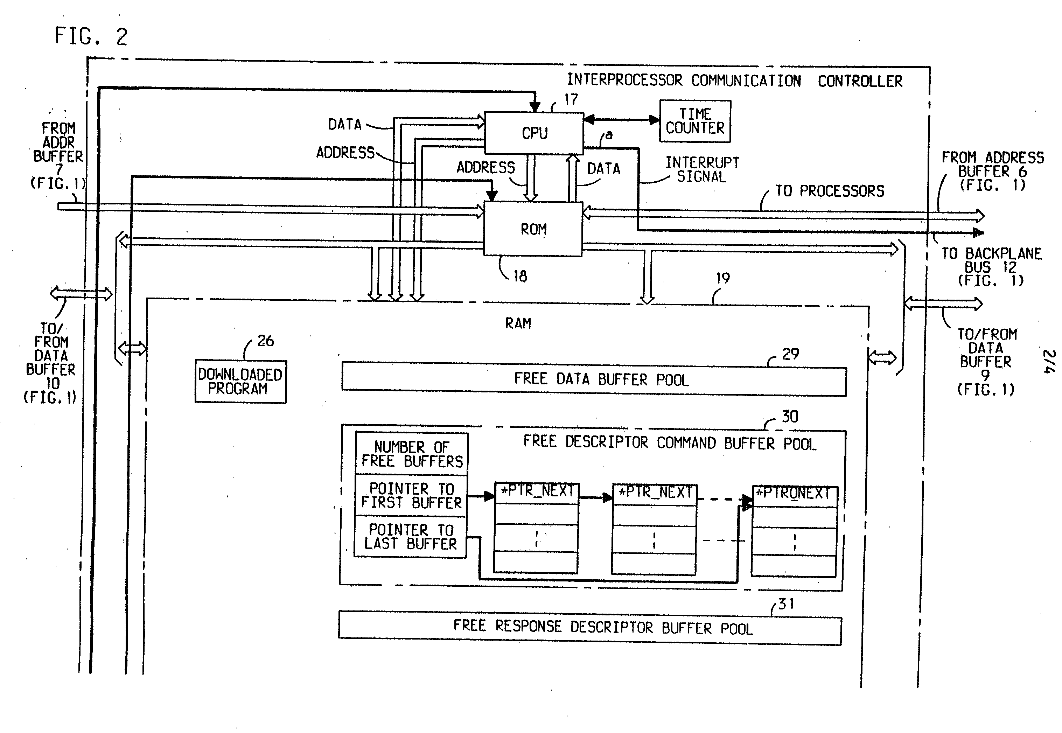

Referring to FIG. 1, there is shown a block diagram of a multiprocessor system embodying the present invention. Application processors 1, 2, and 3 communicate with one another via interprocessor communication controller (ICC) 4 under control of arbitor 5.

Address buffers 6, 7 and 8 are used, respectively, by processors 1, 2 and 3 to store, temporarily, address for reading memory locations in ICC 4. Data buffers 9, 10 and 11 are used, respectively, by processors 1, 2 and 3 to store and to retrieve data received from memory locations in ICC 4 which was accessed by the aforesaid addresses from address buffers 6, 7 and 8. Transceivers 13 and 14 are used, respectively, to connect buffers pairs 7, 10 and 8, 11 to the backplanes of processors 2 and 3 via cables 15 and 16. Although ICC 4 may be isolated by providing processor 1 with its own transceiver, in practice, however, processor 1 does not have its own transceiver in order to reduce costs. Though shown associated with processor 1, ICC 4 may be associated with processor 2 or 3 as well.

Usually, processor 1, 2 or 3 is a time-shared system and ICC 4 has a dedicated function for transferring data between the aforesaid processors. It is therefore necessary for ICC 4 to interrupt processor 1, 2 or 3 via leads a, b, or c, respectively. Processors 1, 2 or 3, however, may not interrupt ICC 4.

Referring more particularly to FIGS. 2, 3, and 4 there are shown details of ICC 4. Central Processing Unit (CPU) 17 is a control and instruction execution unit. CPU 17 executes prestored instructions from read only memory (ROM) 18 only when ICC 4 is at the start up time. The prestored instructions: 1) initialize the settings of the hardware, 2) check the operational status of ICC 4 as a whole, and 3) get ready to execute the program in RAM 19.

The program in RAM 19 is downloaded from one of processors 1, 2 or 3. The aforesaid downloaded program, stored in memory location 26, is executed by CPU 17 when ICC 4 is at the data transmission stage. Because it is shared by processors 1, 2 and 3, RAM 19 can be read and written by processors 1, 2 or 3 under control of arbiter 5. Arbiter 5 determines which processor 1, 2 or 3 can access RAM 19 at any time. RAM 19 provides the space for actual incoming and outgoing data exchanges between any two of the aforesaid processors.

When the number of processors increases, different sections of memory, shown as RAM 19, may be interleaved to gain speed in accessing memory. In this case, more than one arbitor (not shown) may be used. Each arbiter will then permit access to only a predetermined section of the interleaved memory. Again, each arbiter will be associated with some of the processors.

Referring to FIGS. 2, 3 and 4 again, when processor 1, 2 or 3 needs to communicate with another processor 1, 2 or 3, reference is made to free command descriptor buffer pool 30 to determine the address of a free buffer. Thereupon, the command from the originating processor 1, 2 or 3 will be entered, respectively, in the free command descriptor whose address was obtained from free command buffer descriptor pool 30 and placed in command descriptor queue 27, 33 or 35. Each command descriptor in queue 27, 33 or 35 has a command along with other information to be described in detail hereinbelow.

As each command is entered in command descriptor queue 27, 33 or 35 the corresponding command queue descriptor 20, 21 or 22 is also updated. Each of the command queue descriptors 20, 21 or 22 corresponds with a processor 1, 2 or 3 and has the total number of commands in queue 27, 33 or 35 along with a pointer to the first command in queue 27, 33 or 35 remaining to be executed and a pointer to the last command in queue 27, 33 or 35.

After a command is processed, ICC 4 updates the command queue descriptor 20, 21 or 22 and returns the address of the now free buffer from queue 27, 33 or 35 to the free command buffer descriptor pool 30.

After a command from queue 27, 33 or 35 has been performed, ICC 4 obtains the address of a free response descriptor from free response descriptor buffer pool 31 and enters the response in the aforesaid free response descriptor which becomes part of the response descriptor queue 28, 37 or 39. Thereafter, the corresponding response queue descriptor 23, 24 or 25 will also be updated. Each of the response queue descriptors 23, 24 or 25 corresponds to processors 1, 2 or 3 and has the number of responses in queue 28, 37 or 39 along with a pointer to the first response in queue 28, 37 or 39 and a pointer to the last response in queue 28, 37 or 39.

There is also a free data buffer pool 29 which is accessible by both ICC 4 and processors 1, 2 or 3. Three different buffer pools 29, 30 and 31 are used because of the differences in size of the data, commands and responses.

Both command queues 27, 33 and 35 and response queues 28, 37 and 39 are linked lists. That is, one descriptor points to the descriptor in the queue. An advantage of such a scheme permits the use of nonadjacent space.

Like the command queues and the response queues, there exists a data queue (not shown) which is also a linked list. Although a separate data queue may be assigned to each processor, only one data queue is used in the preferred embodiment.

The free buffer pools 29, 30 and 31 also are linked lists. Information about linked lists may be found in a book entitled "List Processing" by J. M. Foster and published by MACDONALD: LONDON and American Elseview Inc.

The processing of free buffer pools 29, 30 and 31 is enclosed in a critical section protected by mutual exclusion primitives, so that no two processors can access a buffer pool at the same time. This is necessary to prevent pointers from being mixed up; this mix up of pointers could occur if ICC 4 were interrupted by a processor when ICC 4 was processing a command. Critical section, also called critical region, is described in a book entitled "Operating System Principles" by P. Brinch Hansen.

The aforesaid command queue descriptor 20, 21 or 22 holds the number of commands in a queue, the address of the first and last commands and is accessible by both ICC 4 and processor 1, 2 or 3. A generic structure of a queue descriptor in C language follows:

```
struct  QUEUE {
        short   no_descriptors; /* number of descriptors
                                   in the queue */
        char    *head_ptr;      /* pointer to the first
                                   descriptor */
        char    *tail_ptr;      /* pointer to the last
                                   descriptor */
};.
```

The command queue descriptor 20, 21 or 22 is allocated by the statement:

```
struct   QUEUE   cmd_queue;.
```

When the head_ptr and the tail_ptr point to the same location, the queue is empty. Therefore, at all times there must exist at least one empty descriptor in the queue. Only processor 1, 2 or 3 can modify the tail_ptr of the command queue. Likewise, only ICC 4 can modify the head_ptr of the command queue.

The elements in a command queue 27, 33 or 35 are called command descriptors. The structure of a command descriptor comprises six fields as follows:

```
struct   command descriptor {
         char     *ptr_next;    /* pointer to the next
                                   command descriptor */
         char     command;      /* command */
         char     cdevice;      /* processor number for
                                   command */
         char     *bufp;        /* data buffer pointer
                                   for command */
         unsigned count;        /* byte count for transfer
                                   command */
         char     *com_id;      /* ID tag uniquely identifying
                                   request */
};.
```

The first field of a command descriptor is a pointer to the next command descriptor. The value of the first field is 0 (zero) in the last command descriptor of the command descriptor queue.

Processors 1, 2 or 3 use the second to sixth field of the command descriptor 27, 33 or 35 to send commands to ICC 4. The meaning of these fields are explained hereinbelow:

command - a request from a processor 1, 2 or 3 to ICC 4 or to another processor 1, 2 or 3;

cdevice - identification of the processor which is the target of a command;

bufp    - a pointer to the start of a buffer structure where data resides for transmission to the target processor;

count   - the number of bytes in the buffer structure;

com_id  - an identification tag uniquely identifying a command.

The legitimate commands are:

BFREE     - free a buffer given to processor 1, 2 or 3
            after a completed READ command and return the
            buffer to the free buffer pool;

BALLOC    - Processor 1, 2 or 3 requests a free buffer.
            If the buffer size needed is greater than
            the capacity of ICC 4, a response B_ TOOBIG
            should be returned; if the size of
            the buffer needed is more than ICC 4 can
            fulfill at this moment, a response
            B_NO_SPC should be returned;

READ      - ICC 4 is instructed to return data found from the
            processor whose identification is stored as
            cdevice of the command descriptor.
            If no data is available on the specified
            processor, a response NO_DATA should be
            returned. After a processor has finished
            with the use of buffer space, a BFREE
            command will be issued.

WRITE     - ICC 4 is instructed to transfer data pointed
            by the pointer bufp to the processor whose
            identification is specified by the field
            cdevice in the command descriptor. The
            number of data bytes to be transferred is
            equal to that in the field entitled count
            in the command descriptor. This space will
            be freed after the WRITE command has been
            completed.

OPEN      - A processor requests ICC 4 for a data
            transmission channel to be established
            with another processor whose identification is equal to cdevice in this command
descriptor.

CLOSE    - The processor informs ICC 4 that the data
transmission channel with another processor
whose identification is equal to cdevice
in this command descriptor should be taken
down.

The protocol associated with the command queue
follows:

. On request of a calling processor, processor 1,
2 or 3 makes sure that the command queue which is
associated with the calling processor is not
full by checking the number of descriptors
therein before entering the command descriptor
in the queue;

. The processor updates the number of command
descriptors, and the tail pointer of the command
queue.  To synchronize the access of a number
of command descriptors by the two processors,
this number is put in a critical section
protected by mutual exclusion primitives;

. If a command queue is full, the calling
processor waits for space to become available; the
processor will be informed when space becomes
available during the response processing
phase;

. When ICC 4 is not responding to a command,
it will poll the command descriptor queues
27, 33 and 35 and remove command descriptors
which have been responded to;

. ICC 4 updates the number of command descriptors, and the head pointer of each command queue descriptor 20, 21 and 22.

When ICC 4 is ready to send a response to a processor, it inserts a response descriptor in the response queue 28, 37 or 39.  Response queue descriptor 23, 24 or 25 has the same structure as that of command queue descriptor 20, 21 or 22.  A response queue descriptor 23, 24 or 25 is used to describe the status of the response queue and can be allocated by the statement:

struct QUEUE response_queue;.

The conventions established for processing a response queue applies to the processing of a command queue, except that the roles of  processor 1, 2 or 3 and ICC 4 are reversed.

The elements in the response queue are called response descriptors 28, 37 or 39.  The structure of a response descriptor has seven fields as follows:

```
struct response descriptor {
        char *ptr_next;      /* pointer to the next
                                response descriptor */
        char response;       /* response of requested
                                command */
        char rcommand;       /* command corresponding to
                                response */
        char rdevice;        /* processor number of the
                                response */
        char *rbuf;          /* data buffer pointer for
                                response */
        unsigned rcount;     /* number of characters */
        char *rcom_id;       /* identification tag of
                                command corresponding to
                                response */
};
```

The first field serves as a pointer to the next response descriptor in queue 28, 37 or 39. ICC 4 uses the second to seventh fields of the response descriptor to respond to processor 1, 2 or 3. The meanings of these fields are explained below:

```
        response  - response to a command
        rcommand  - the command calling for this response
        rdevice   - the identification of the processor
                    to which the response is made
        rbuf      - pointer to the response data
        rcount    - the number of bytes, or characters,
                    of the response data
        rcom_id   - the identification of the command
                    corresponding to the response.
```

The legitimate responses are:

```
GOOD      - the command was completed successfully
BAD_COM   - the command was illegal or could not be
            recognized
BAD_CDEV  - an illegal cdevice was specified;
            it is a return of an unsuccessful
            OPEN command
IO_ERR    - an error in data transfer has occurred
B_TOOBIG  - the response to a BALLOC command which
            needs space greater than that available
            in ICC 4
B_NO_SPC  - the response to a BALLOC command which
            cannot be fulfilled at this moment,
            because of a temporary lack of buffer
            space.
DATA      - indicating there is data available for the
            processor whose identification is specified
            in the rdevice field of the response
            descriptor
NO_DATA   - a READ command was given, but there is no data
```

available from the processor whose identification is specified in the rdevice field of the response decriptor.

The protocol associated with the response queue follows:

. At the completion of a command, ICC 4 constructs a response descriptor by requesting a free response buffer from the free response buffer pool in the share memory.

. If the response queue is not full, ICC 4 enters the response descriptor in the response queue.

. ICC 4 updates the number of response descriptors, and the tail pointer of the response queue descriptor 23, 24 or 25. The number of the response descriptors is in a critical section protected by mutual exclusion primitives.

. If the response queue is full, ICC 4 bypasses the response processing and tries to enter a response descriptor in queue 28, 37 or 39 at a later time.

. An interrupt will be generated by ICC 4 to processor 1, 2 or 3 when either the response queue is full or a timer expires.

. After honoring an interrupt, the processor makes sure the response queue is not empty and removes as many response descriptors as are available from queue 28, 37 or 39.

. Processor 1, 2 or 3 updates the number of the response descriptors, and the head pointer of response queue 28, 37 or 39.

. Processor 1, 2 or 3 alerts those processors 1, 2 or 3 which had been waiting for free buffer space that command buffer space has become available.

The downloaded program in storage area 26, which is to be executed by CPU 17, typically comprises a main routine and various supporting subroutines which perform specific functions. The main routine is comprised of initialization steps and an endless loop within which subroutines are called to retrieve and process commands from processors 1, 2 or 3.

Within the loop, there are also subroutines which send the response to processors 1, 2 or 3. The initialization steps set up the initial value for hardware, the free buffer pools, the default values for software data structures and notify processors 1, 2 or 3 that ICC 4 is operational.

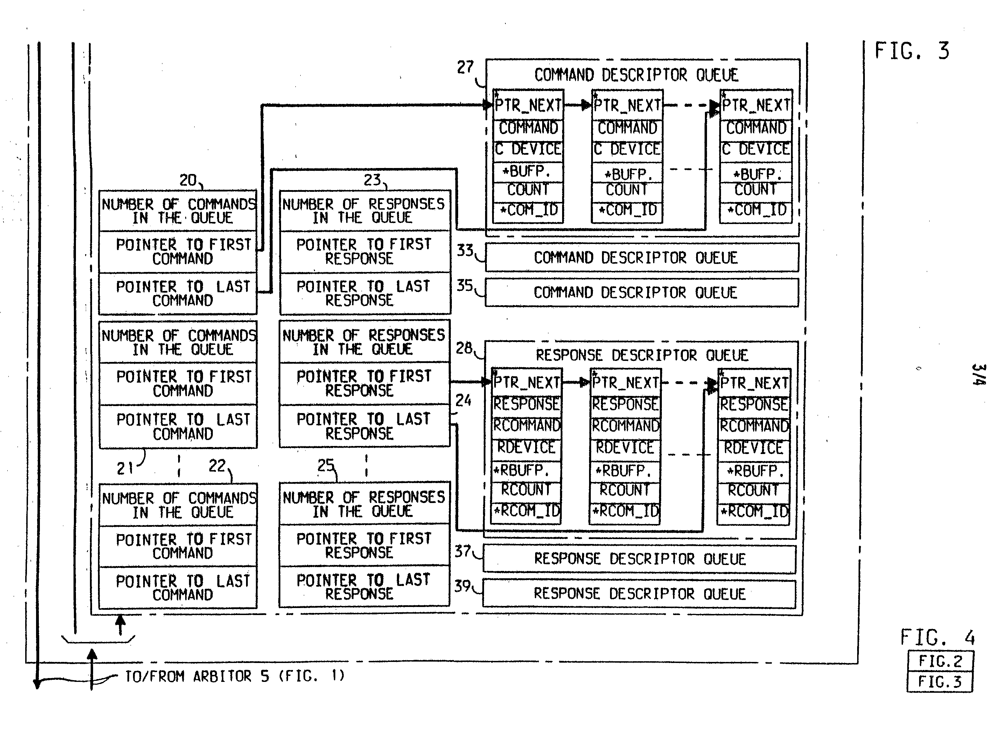

The loop is entered on start up and never stops unless an unrecovered error has occurred. The flow of control in the loop is shown in FIG. 4, which is self explanatory.

OPERATION

The operation of the present invention, for example, when processor 1 wants to send data to processor 2, is described hereinbelow. Assume the command queue descriptor 20 contains information about the command queue 27. Processor 1 uses information such as the number of commands which have been queued along with the head and tail pointers of queue 27 to insert a command descriptor in command queue 27. Also, assume that the response queue descriptor 23 contains the information about the response queue 28. Processor 1 can remove and read a response descriptor from the response queue 28. Assume further, areas 21 and 24 and queues 33 and 37 serve the same functions for processor 2 as areas 20 and 23 and queues 27 and 28 for processor 1.

In order to send data to processor 2, processor 1 must issue an OPEN command to ICC 4 to establish a data transmission channel with processor 2. After establishing a data transmission channel, processor 1 has to insert a BALLOC command descriptor in command queue 27. That is, the command field in the command descriptor is set to BALLOC. The address of the command descriptor is obtained from free command buffer 30 and the tail pointer in command queue descriptor 20 is corrected.

The BALLOC command requests buffer space in memory 19 for storing the data to be transferred. After receiving the BALLOC command, and if there is space available, a response descriptor GOOD is inserted in response queue 28 and the address of the response GOOD is entered in the tail pointer of response queue descriptor 23. In the response descriptor GOOD, the buffer pointer and the length of the buffer space are specified in the field rbufp and rcount, respectively. After receiving the response from response queue 28, processor 1 can write data in the buffer space pointed by the pointer in the response descriptor.

Processor 1 also inserts a command descriptor WRITE in the command queue 27. The address of the command descriptor is entered in command queue descriptor 20 because the command WRITE is the most recent addition to the queue. Besides the designated recipient, the address and length of data are also specified in the command descriptor. In other words, the field cdevice has the address of processor 2; bufp has the starting address of the data; and, count has the length of the data.

Having received the WRITE command from processor 1, a DATA response descriptor is inserted in response queue 28 by ICC 4. The address of the response descriptor is entered in the tail pointer of queue descriptor 24. The response DATA is used to inform processor 2, via an interrupt signal on lead b, that a certain amount of data is available at the address indicated by pointer rbufp. The amount of data is specified in the field rcount of the response descriptor.

When processor 2 issues a READ command to ICC 4, the response, from response queue 37, whose address is entered in the tail pointer of queue descriptor 24 is read and the data from the memory 19 is transferred via data buffer 10 into processor 2, thereby achieving interprocessor communication. A command CLOSE is issued to take down the data transmission channel.

With this approach, processor 1 can communicate without knowing about or having direct physical connection with processor 2. This invention permits, therefore, a configuration of loosely coupled multiprocessors via a shared memory. This is one of the merits which has not been achieved by any previous invention which uses a shared memory scheme.

Another merit of this invention is that the READ and WRITE operation between ICC 4 and processor 1, 2 or 3 are non-blocking. In other words, the next operation, be it READ or WRITE, can proceed without waiting for the completion of the previous operations. Therefore, the data transmission is truely two-way simultaneous as opposed to two-way alternative.

Claims

1. A system for providing communication between any two of a plurality of processors, said system CHARACTERIZED BY

an interprocessor communication controller (ICC),

an arbitor for determining which of said processors may access ICC at any time,

a plurality of transceivers for receiving commands from one of said processors and for sending said commands to an address buffer; and for receiving responses from a data buffer and for sending said processors, and

interrupt signal generating means to permit said ICC to interrupt selectively each of said processors.

2. The system of claim 1 wherein said ICC is CHARACTERIZED BY

a random access memory (RAM) for receiving and storing an application program from any one of said processors,

a read only memory (ROM) for storing a control program, and

a central processing unit (CPU) for executing said control program and said application program.

3. The system of claim 2 wherein said RAM is CHARACTERIZED BY

a free command descriptor buffer pool,

a free response descriptor buffer pool,

a free data buffer pool,

a plurality of command descriptor queues,

a plurality of response descriptor queues,

a plurality of data queues,

a plurality of command queue descriptors, and

a plurality of response queue descriptors.

4. The system of claim 3 wherein said free command descriptor buffer pool is

CHARACTERIZED BY

the number of free command descriptors in said free command descriptor buffer pool,

a pointer for indicating the address of the first free command descriptor in said free command descriptor buffer pool, and

a pointer for indicating the address of the last command descriptor in said free command descriptor buffer pool, said free command descriptors forming a linked list wherein each of said free command descriptors points to the next one of said free command descriptors.

5. The system of claim 3 wherein said free response descriptor buffer pool is

CHARACTERIZED BY

the number of free response descriptors in said free response descriptor buffer pool,

a pointer for indicating the address of the first free response descriptor in said free response descriptor buffer pool, and

a pointer for indicating the address of the last response descriptor in said free response descriptor buffer pool, said free response descriptors forming a linked list wherein each of said free response descriptors points to the next one of said free response descriptors.

6. The system of claim 3 wherein said free data descriptor buffer pool is

CHARACTERIZED BY

the number of free data descriptors in said free data descriptor buffer pool,

a pointer for indicating the address of the first free data descriptor in said free data descriptor buffer pool, and

a pointer for indicating the address of the last free data descriptor in said free data descriptor buffer pool, said free data descriptors forming a linked list wherein each of said free data descriptors points to the next one of said free data descriptors.

7. The system of claim 3 wherein each of said command descriptor queues is

CHARACTERIZED BY

a plurality of linked command descriptors where each is for pointing to the next command descriptor in the command descriptor queue, and each of the command descriptors comprising plurality of fields for holding the name of the command and information about the command.

8. The system of claim 3 wherein each of said response descriptor is

CHARACTERIZED BY

a plurality of linked response descriptors for pointing to the next one of said response descriptors in said response descriptor queue, and each of said response descriptors comprising a plurality of fields for holding the name of the response and information about the response.

9. The system of claim 3 wherein each of said command queue descriptors is

CHARACTERIZED BY

the number of commands in said command descriptor queue is controlled by said ICC,

a pointer controlled by the ICC for indicating the address of the first command descriptor in said command descriptor queue, and

a second pointer controlled by one of the processors for indicating the address of the last command descriptor in said command descriptor queue.

10. The system of claim 3 wherein each of said response queue descriptors is

CHARACTERIZED IN THAT

the number of responses in said response descriptor queue is controlled by said ICC,

a pointer indicating the address of the first response descriptor in said response descriptor queue is controlled by one of said processors, and

a second pointer indicating the address of the last response descriptor in said response descriptor queue is controlled by said ICC.

11. A method of transferring information between any two processors in a system comprising a plurality of processors

CHARACTERIZED BY

initiating a request from a first one of said processors to an interprocessor communication controller (ICC) to open a communication channel with a second one of said processors,

responding to said request by said ICC when said second processor is available,

requesting said ICC by said first processor to determine if said ICC has the required space for receiving and temporarily holding information from said first processor,

responding by said ICC to said first processor when said required space becomes available,

sending said information from said first processor to said ICC,

interrupting said second processor by said ICC, and

reading said information by said second processor.

12. The method of claim 11 further comprising the steps of

looking up a free command descriptor buffer pool in said ICC by said first processor,

obtaining a free command descriptor from said free command descriptor buffer pool,

entering said command in said free command descriptor and placing said command descriptor at the end of a command descriptor queue associated with said first processor, and

changing a second pointer in a command queue descriptor associated with said first processor by entering the address of said command descriptor which was most recently entered in said command descriptor queue.

FIG. I

## FIG. 2

INTERPROCESSOR COMMUNICATION CONTROLLER

FROM ADDR BUFFER 7 (FIG. 1)

DATA

ADDRESS

CPU — 17

TIME COUNTER

ADDRESS   DATA   a   INTERRUPT SIGNAL

TO PROCESSORS

FROM ADDRESS BUFFER 6 (FIG. 1)

ROM

18

TO BACKPLANE BUS 12 (FIG. 1)

19

TO/ FROM DATA BUFFER 10 (FIG. 1)

RAM

TO/FROM DATA BUFFER 9 (FIG. 1)

26 DOWNLOADED PROGRAM

29 FREE DATA BUFFER POOL

30 FREE DESCRIPTOR COMMAND BUFFER POOL

NUMBER OF FREE BUFFERS

POINTER TO FIRST BUFFER → *PTR_NEXT → *PTR_NEXT → *PTRONEXT

POINTER TO LAST BUFFER

31 FREE RESPONSE DESCRIPTOR BUFFER POOL

2/4

0164972

**FIG. 3**

27 — COMMAND DESCRIPTOR QUEUE

| PTR_NEXT | PTR_NEXT | - - - | PTR_NEXT |
|---|---|---|---|
| COMMAND | COMMAND | | COMMAND |
| C DEVICE | C DEVICE | | C DEVICE |
| *BUFP. | *BUFP. | | *BUFP. |
| COUNT | COUNT | | COUNT |
| *COM_ID | *COM_ID | | *COM_ID |

| 20 NUMBER OF COMMANDS IN THE QUEUE | 23 NUMBER OF RESPONSES IN THE QUEUE |
|---|---|
| POINTER TO FIRST COMMAND | POINTER TO FIRST RESPONSE |
| POINTER TO LAST COMMAND | POINTER TO LAST RESPONSE |

33 — COMMAND DESCRIPTOR QUEUE

35 — COMMAND DESCRIPTOR QUEUE

| NUMBER OF COMMANDS IN THE QUEUE | NUMBER OF RESPONSES IN THE QUEUE |
|---|---|
| POINTER TO FIRST COMMAND | POINTER TO FIRST RESPONSE |
| POINTER TO LAST COMMAND | POINTER TO LAST RESPONSE |

28 — RESPONSE DESCRIPTOR QUEUE

24

| PTR_NEXT | PTR_NEXT | - - - | PTR_NEXT |
|---|---|---|---|
| RESPONSE | RESPONSE | | RESPONSE |
| RCOMMAND | RCOMMAND | | RCOMMAND |
| RDEVICE | RDEVICE | | RDEVICE |
| *RBUFP. | *RBUFP. | | *RBUFP. |
| RCOUNT | RCOUNT | | RCOUNT |
| *RCOM_ID | *RCOM_ID | | *RCOM_ID |

21   22

25

| NUMBER OF COMMANDS IN THE QUEUE | NUMBER OF RESPONSES IN THE QUEUE |
|---|---|
| POINTER TO FIRST COMMAND | POINTER TO FIRST RESPONSE |
| POINTER TO LAST COMMAND | POINTER TO LAST RESPONSE |

37 — RESPONSE DESCRIPTOR QUEUE

39 — RESPONSE DESCRIPTOR QUEUE

TO/FROM ARBITOR 5 (FIG. 1)

0164972

**FIG. 4**

| FIG. 2 |
|---|
| FIG. 3 |

FIG. 5

```
                    ┌──────────────────┐
             ┌─────▶│NOTIFY THE PROCESSOR│
             │      │THAT THE ICC 4 IS  │
             │      │  OPERATIONAL      │
             │      └──────────┬────────┘
             │                 ▼
             │            ╱─────────╲          ┌────────────────────┐
             │           ╱  ANY TIMERS╲  YES   │GENERATE AN INTERRUPT TO│
             │          ╱   EXPIRE ?    ╲─────▶│ THE PROPER PROCESSOR │
             │          ╲              ╱        │   FOR PICKING UP    │
             │           ╲            ╱         │    THE AVAILABLE    │
             │            ╲──────────╱          │RESPONSE DESCRIPTORS │
             │              │ NO                └──────────┬─────────┘
             │              ▼◀──────────────────────────────┘
             │            ╱─────────╲           ┌──────────────────┐
             │           ╱ IS THERE  ╲   YES    │                  │
             │          ╱  ANY ERROR ? ╲───────▶│   LOG THE ERROR  │
             │          ╲              ╱         └────────┬─────────┘
             │           ╲            ╱                   │
             │            ╲──────────╱                    │
             │              │ NO ◀───────────────────────┘
             │              ▼
             │      ┌──────────────────┐
             │      │POLL THE COMMAND   │
             │      │QUEUES STATUS      │
             │      └──────────┬────────┘
             │                 ▼
             │            ╱─────────╲          ┌──────────────────┐
             │           ╱    IS     ╲   YES   │PROCESS THE COMMAND│
             │          ╱ THERE A COMMAND╲────▶│BY INVOKING PROPER │
             │          ╲  PRESENT ?    ╱       │   SUBROUTINE     │
             │           ╲            ╱         └────────┬─────────┘
             │            ╲──────────╱                   ▼
             │              │ NO              ╱──────────────────╲
             │              │          NO    ╱     IS THERE       ╲
             │              │◀──────────────╱ A RESPONSE CORRESPONDING╲
             │              │                ╲  TO THE COMMAND     ╱
             │              │                 ╲  TO BE SENT ?    ╱
             │              │                  ╲──────────────╱
             │              │                        │ YES
             │              │                        ▼
             │              │                 ┌──────────────────┐
             │              │                 │INSERT THE RESPONSE│
             │              │                 │DESCRIPTOR TO THE  │
             │              │                 │  RESPONSE QUEUE   │
             │              │                 └────────┬─────────┘
             │              ▼◀──────────────────────────┘
             │      ┌──────────────────┐
             │      │POLL THE RESPONSE  │
             │      │QUEUES STATUS      │
             │      └──────────┬────────┘
             │                 ▼
             │            ╱─────────╲          ┌──────────────────┐
             │           ╱ IS THERE  ╲   YES   │   GENERATE AN    │
             │          ╱ANY RESPONSE QUEUE╲──▶│   INTERRUPT TO   │
             │          ╲   FULL ?      ╱       │   THE PROPER     │
             │           ╲            ╱         │   PROCESSOR      │
             │            ╲──────────╱          └────────┬─────────┘
             │              │ NO ◀───────────────────────┘
             │              ▼
             │            ╱─────────╲          ┌──────────────────┐
             │           ╱ IS THERE  ╲   YES   │   GENERATE AN    │
             │          ╱ A RESPONSE   ╲──────▶│   INTERRUPT TO   │
             │          ╲  PRESENT ?   ╱        │   THE PROPER     │
             │           ╲            ╱         │   PROCESSOR      │
             │            ╲──────────╱          └──────────────────┘
             │              │ NO
             └──────────────┘
```